# EUROPEAN PATENT SPECIFICATION

(11) **EP 1 880 951 B1**
(45) Date of publication and mention of the grant of the patent: **05.03.2014**
(21) Application number: 05857767.7
(22) Date of filing: 22.04.2005
(51) Int. Cl.: B65D 6/24, B65D 21/02

(54) **POLYMER BOX**
POLYMERKASTEN
CAISSE POLYMERE

(30) Priority: 22.04.2005 AZ 10605
(43) Date of publication of application: 23.01.2008
(73) Proprietor: Mahmudov, Kamran Mahmud Oglu, Baku 370015 (AZ)
(72) Inventor: Mahmudov, Kamran Mahmud Oglu, Baku 370015 (AZ)
(74) Representative: Anohins, Vladimirs
(86) International application number: PCT/AZ2005/000002
(87) International publication number: WO 2006/116824

(56) References cited:
- EP-A- 1 264 774
- EP-A2- 0 211 795
- DE-U1- 8 908 223
- FR-A- 2 681 047
- FR-A1- 2 613 699
- RU-C1- 2 067 545
- RU-C1- 2 108 275
- SU-A- 308 927
- US-A- 4 320 845
- US-A- 4 635 562
- US-A- 4 782 972

## Description

The invention relates to packaging-tare inventory, used in transportation and storage in agrarian industry, besides it may be used for transportation of agricultural and food products, specifically, fruits and vegetables.

There is known the collapsible box (application for invention RU Nº 93008608, B65D 6/16), which contains a base, side and end walls attached to base with ability of rotation as well as detent mechanism for assembled walls. One of the deficiencies of such tare is the short - term usage and from the other side its constructional difficulty which allows only to fold the box but does not allow to disassemble and assemble the box.

There is known the polymer box (patent RU Nº 2088503, B65D 6/00), made of moulded plastics and consisting of four folding walls, hingedly connected with the base. Folding walls are mutually connected by angular pillars. The deficiencies of such box is its fast deformation during exploitation, and it occupies much place in an empty form because this box is not for disassembling. Besides, the complicated construction of mentioned boxes makes difficult their production by moulding under pressure and the transportation of finished boxes, stowed one on another.

The solution according to the German Utility Model DE 8908223 U1 is an attempt to alleviate the above problems. It can be considered as the closest prior art for the present invention. However, the box according to DE 8908223 U1 is not completely free of problems either.

First, the end walls and side walls of the box are interconnected by means of fasteners somewhat similar to snap fasteners used for clothes, but of a bigger size. Such a connection is not reliable when the box is used for transportation of goods.

Second, the end walls and side walls of the box according to DE 8908223 U1 are connected to its base by means of hooks and sockets, the former being formed on the base and the latter being formed in the walls. Said hooks and sockets are shaped so that, to connect the walls to the base, the hooks are inserted into the sockets while the walls are oriented perpendicularly to the base. Such a connection is not reliable, as in case of a comparatively little stress the hooks can easily disengage from the sockets, which leads to a spontaneous disconnection of the base.

Third, a construction with such shaped end walls and with hooks on the base does not provide a sufficient compactness when the box is disassembled.

Fourth, as can be seen from the drawings of the box according to DE 8908223 U1, its pieces are shaped in a complicated way.

The problem to be solved by the invention is to develop commissioning to the consumer turnover of nonexpendable mountable-and-dismountable polymer boxes of simple construction of different sizes for usage in the agroindustrial complex.

The present invention is free from the above disadvantages of the prior art.

The formulated problem is solved by that in polymer box, consisting of base and two couples of side and end walls fixed on base, united pairwise by angular pillars, according to invention angular pillars are embodied conjointly with side box walls and provided with reinforced latches, but end walls are embodied with latch sockets, side and end parts for fixing to base are provided with segmental hooks and base is embodied with the sockets for hooks.

Angular pillars in the upper part have stepped ledges, and a lower supporting part is shaped in angular form.

Besides, side and end walls are produced by moulding under pressure according to the mirror reflection principle that is why it is possible to produce both left and right walls in the same mould.

The formulated problem is solved by that in a polymer box, consisting of a base and two pairs of longer side walls and shorter end walls fixed on the base, united pairwise by angular pillars, according to the invention the angular pillars are embodied conjointly with the longer side walls and provided with reinforced latches, but the shorter end walls are embodied with latch sockets, the longer side walls and shorter end walls, for fixing to the base, are provided with segmental hooks and the base is embodied with sockets for hooks.

The angular pillars in the upper part have stepped ledges and have a lower supporting part shaped in angular form.

Besides, the longer side walls and shorter end walls are produced by moulding under pressure according to the mirror reflection principle due to which it is possible to produce both left and right walls in the same mould. The polymer box may have three sizes: 75 mm x 400 mm x 600 mm; 150 mm x 400 mm x 600 mm; 300 mm x 400 mm x 600 mm.

Proposed mountable-and-dismountable polymer boxes may be produced also in any other sizes. Box details are made by moulding from initial polymeric raw material and also from waste with dust filler and plasticizer base or 100% reprocessed thermoplastic polymeric raw material.

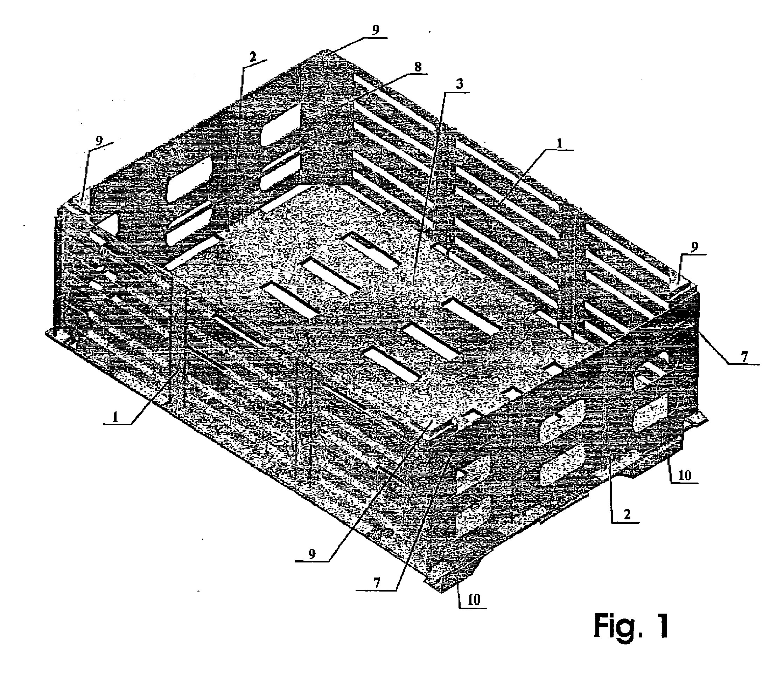

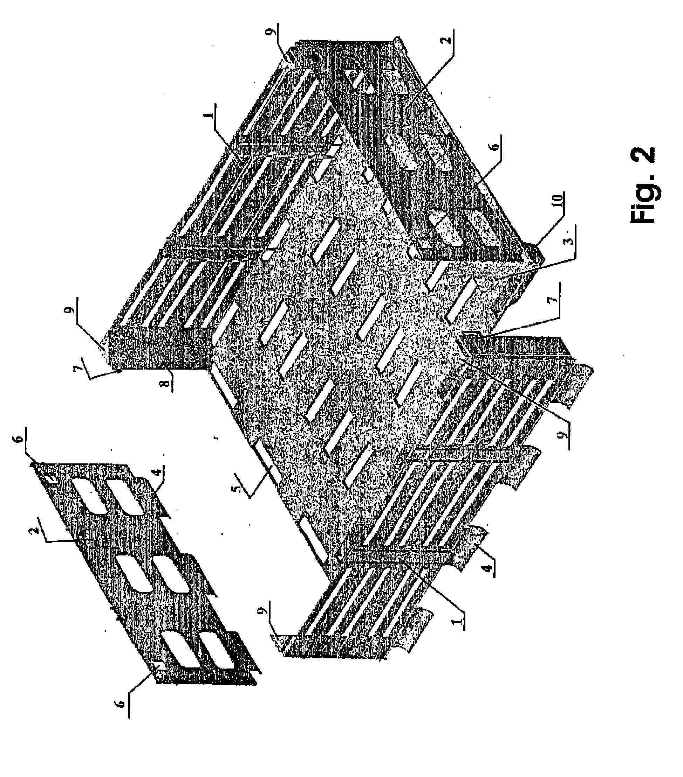

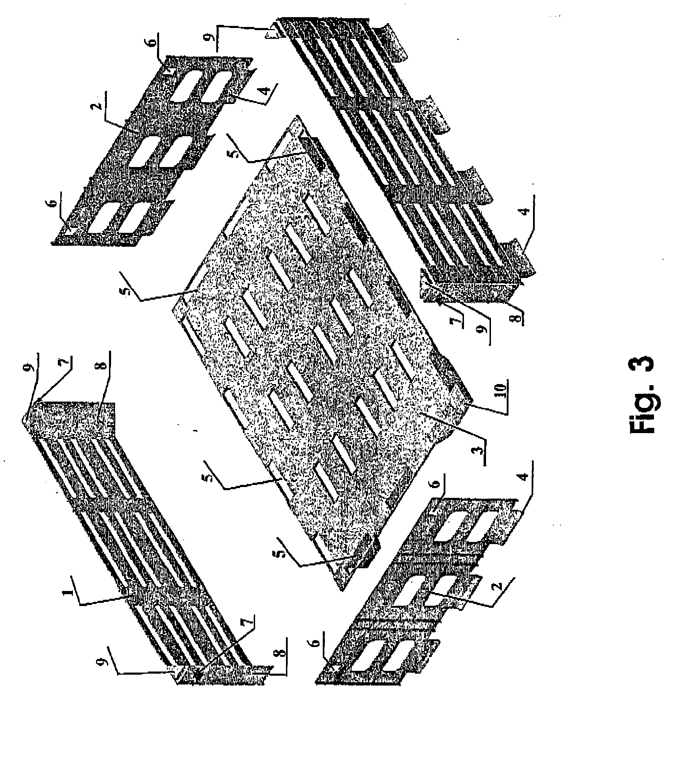

The proposed polymer box is shown in the drawings Figs.1, 2, 3, 4, the fixing of walls with each other being shown.

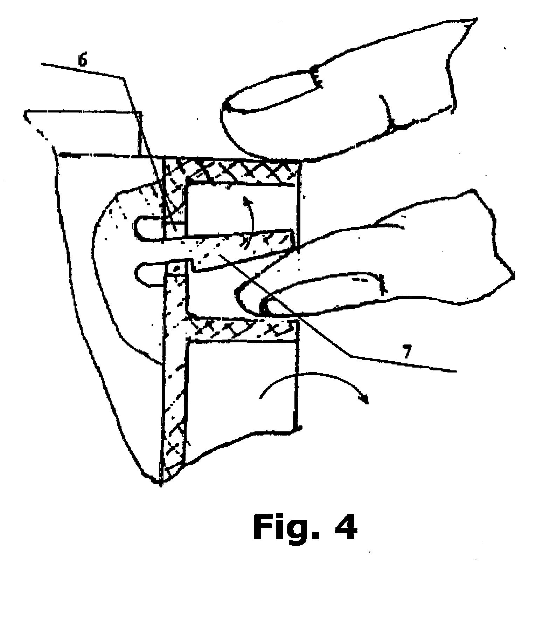

Polymer box consists of side walls 1, end walls 2 and base 3. All these parts along with segmental hooks 4 and sockets 5 for hooks, joint sockets 6 for latches and latches 7 embodied in the upper part of the angular pillar 8 of side wall 1 (Fig.4) are produced by moulding under pressure in different moulds. In order to increase the usage multiplicity, rigidity and durability of the box, the latches 7 of side walls 1 are reinforced with metal plates during moulding. Angular pillars 8 in the upper part have stepped ledges 9 and lower supporting part 10 is shaped in angular form.

In order to obtain the completely entire form of the box, its side 1 and end walls 2 with hooks 4 are mounted under 180° to the sockets 5 for hooks, implemented along the perimeter of base 3, then they are elevated up under 90° and they are fixed to each other by latches 7.

During mounting of boxes into tiers, the supporting part 10 of the pillar 8 of the upper box is mounted on stepped ledges 9 of the pillar 8 of underlying box.

For dismounting of the box side and end walls are separated from each other by pressing latches 7 to the edge of the sockets 6 and then by opening them for 180° they are completely separated from base 3.

As during dismounting of the box its total size decreases for 50% and it may be mounted tightly, it occupies little place while transportation.

## Claims

1. Polymer box, consisting of a base (3) and two pairs of longer side walls (1) and shorter end walls (2) fixed on the base (3) united pairwise by angular pillars (8) embodied with one of said pairs of walls, hook and socket connections being provided between the base (3) and the lower edges of the two pairs of walls, and releasable latches (7) being provided on the angular pillars (8),
**characterized in that**
the angular pillars (8) are embodied conjointly with the longer side walls (1) of the box, their manually releasable latches (7) being reinforced with metal cutter tips during moulding,
the shorter end walls (2) are embodied with latch sockets (6) for the manually releasable latches (7) of the angular pillars (8),
the longer side walls (1) and the shorter end walls (2) are provided with segmental hooks (4) at their respective lower edges for fixing to the base (3), the base (3) is embodied with sockets (5) for the hooks (4),
the hooks (4) being mountable to the sockets (5) before elevation of the pairs of side and end walls.

2. The polymer box according to claim 1,
**characterized in that**
for multistage box fixing, the angular pillars (8) in the upper part have stepped ledges and have a lower supporting part shaped in angular form.

3. The polymer box according to any of claims 1-2,
**characterized in that**
the longer side walls (1) and the shorter end walls (2) are produced by moulding under pressure according to the mirror reflection principle, making it possible to produce both left and right walls (1) in the same mould.

## Patentansprüche

1. Polymerkiste, die aus einer Basis (3) und zwei Paaren von längeren Seitenwänden (1) und kürzeren Stirnwänden (2), die an der Basis (3) befestigt sind, besteht, paarweise vereint durch winklige Pfeiler (8), die mit einem der Paare von Wänden integriert sind, wobei Verbindungen aus Haken und Fassung zwischen der Basis (3) und den unteren Kanten der zwei Paare von Wänden bereitgestellt werden und lösbare Klinken (7) an den winkligen Pfeilern (8) bereitgestellt werden,
**dadurch gekennzeichnet, dass**
die winkligen Pfeiler (8) gemeinschaftlich mit den längeren Seitenwänden (1) der Kiste integriert sind, wobei deren von Hand lösbare Klinken (7) während des Formens mit Metallschneidspitzen verstärkt werden,
die kürzeren Stirnwände (2) mit Klinkenfassungen (6) für die von Hand lösbaren Klinken (7) der winkligen Pfeiler (8) integriert sind,
die längeren Seitenwände (1) und die kürzeren Stirnwände (2) an ihren jeweiligen unteren Kanten mit Segmenthaken (4) zum Befestigen an der Basis (3) versehen sind,
die Basis (3) mit Fassungen (5) für die Haken (4) versehen ist,
die Haken (4) vor dem Aufrichten der Paare von Seiten- und Stirnwänden an den Fassungen (5) angebracht werden können.

2. Polymerkiste nach Anspruch 1,
**dadurch gekennzeichnet, dass**
zur mehrstufigen Kistenbefestigung die winkligen Pfeiler (8) in dem oberen Teil abgestufte Leisten haben und einen unteren Stützteil haben, der in winkliger Form gestaltet ist.

3. Polymerkiste nach einem der Ansprüche 1 bis 2,
**dadurch gekennzeichnet, dass**
die längeren Seitenwände (1) und die kürzeren Stirnwände (2) durch Formen unter Druck entsprechend dem Spiegelreflexionsprinzip hergestellt werden, was es möglich macht, sowohl linke als auch rechte Wände (1) in der gleichen Form herzustellen.

## Revendications

1. Caisse de polymère constituée d'une base (3) et de deux paires de parois latérales longues (1) et de parois terminales courtes (2) fixées sur la base (3) unies par paires par des montants d'angle (8) réalisés avec l'une desdites paires de parois, des raccords à crochet et douille étant prévus entre la base (3) et les bords inférieurs des deux paires de parois, et des verrous libérables (7) étant ménagés sur les montants d'angle (8),
**caractérisée en ce que**
les montants d'angle (8) sont réalisés conjointement avec les parois latérales longues (1) de la caisse, leurs verrous (7) libérables à la main étant renforcés par des pointes de coupe métalliques au cours du moulage,
les parois terminales courtes (2) sont réalisées avec des manchons de verrouillage (6) pour les verrous (7) libérables à la main des montants d'angle (8),
les parois latérales longues (1) et les parois terminales courtes (2) sont pourvues de crochets segmentaires (4) à leurs bords inférieurs respectifs pour les fixer à la base (3), la base (3) étant réalisée avec des douilles (5) pour les crochets (4),
les crochets (4) pouvant être montés sur les douilles (5) avant élévation des paires de parois latérales et terminales.

2. Caisse de polymère selon la revendication 1,
**caractérisée en ce que**,
pour une fixation de caisse multistade, les montants d'angle (8) de la partie supérieure ont des bords étagés et ont une partie de support inférieure moulée en forme angulaire.

3. Caisse de polymère selon l'une quelconque des revendications 1 à 2,
**caractérisée en ce que**
les parois latérales longues et les parois terminales courtes (2) sont produites par moulage sous pression selon le principe de la réflexion symétrique, ce qui permet de produire à la fois des parois de gauche et de droite (1) dans le même moule.
